# EUROPEAN PATENT APPLICATION

(11) **EP 0 885 689 A1**
(43) Date of publication of application: **23.12.1998**
(21) Application number: 97121177.6
(22) Date of filing: 02.12.1997
(51) Int. Cl.: B23Q 11/08

(54) **A numerical control router enclosed by a housing**

(30) Priority: 20.06.1997 JP 180724/97
(71) Applicant: HEIAN CORPORATION, Hamamatsu-shi, Shizuoka-ken (JP)
(72) Inventor: Yamauchi, Yoshiyuki, Hamamatsu-shi, Shizuoka-ken (JP)
(74) Representative: Kirschner, Klaus Dieter, Dipl.-Phys.

(57) **Abstract**

A housing (23) is mounted on a horizontal beam (1a) of a support structure (1), the front of a stretched member (1b) under the support structure (1) and the side of the support structure (1) and the stretched member (1b), an opening (23a) of the housing (23) is formed before a head structure (20), a table support member (24) is provided with the end of the stretched member (1b) outside of the opening (23a), a suction table (25) is rotatably supported with a table support member (24), and a table rotating cylinder (26) for rotating the suction table (25) is attached in the hollow portion of the table support member (24).

## Description

### Background of the Invention:

The present invention relates to a numerical control router enclosed by a housing having an opening for closing by a suction table.

In the numerical control routor for processing a process board, rails are provided with a horizontal beam supported by a supporting structure on a base, a head structure supported by the rails to move right and left, downward plural head having respectively motors are mounted on the head structure and processing tools as a drill or a cutter are respectively attached to the shaft of motors.

Table rails are provided with the base downward the heads, a suction table on which a process board is sucked is moved on the rails to the head structure before and behind.

Because, the numerical control router is not covered by any housing and the suction table is moved under the heads, wood chips and dust are scattered on and near the suction table when the process board is processed. and noise is generated when the process board is processed.

### Summary of the Invention:

It is, therefore, the primary object of the present invention to provide a numerical control router enclosed by a housing in which chips and dust are shut when a process board is processed.

It is another object of the present invention to a numerical control router enclosed by a housing having a suction table by which the opening of the housing is closed and opened.

It is the other object of the present invention to a numerical control router enclosed by a housing having a suction table from which a processed process board is removed and on which a new process board is sucked when the opening of the housing.

In order to accomplish the above and other object, the present invention comprises a horizontal move member moving on horizontal rails provided with the side of a support structure, longitudinal move member moving on longitudinal rails provided with the horizontal move member, a head structure mounted on the longitudinal move member, and heads having process tools as a drill and a cutter respectively moved on the head structure by a cylinder before and behind, and is charracterized in that a housing enclosing the surrounding of the horizontal move member, the longitudinal move member and the head structure is supported by the support structure and has an opening before the head structure, a table support member is provided with the support structure in the opening of the housing, a suction table is rotatablly supported on the table support member, and a table rotating cylinder for rotating the suction table has a base member rotatablly connected to the support structure and a moving shaft rotatablly connected to the suction table, whereby a process board is mounded and sucked on the suction table, the opening of the housing closed by rotating the suction table by the table rotating cylinder and the process board is processed in a closed state.

### BRIEF DESCRIPTION OF THE DRAWINGS:

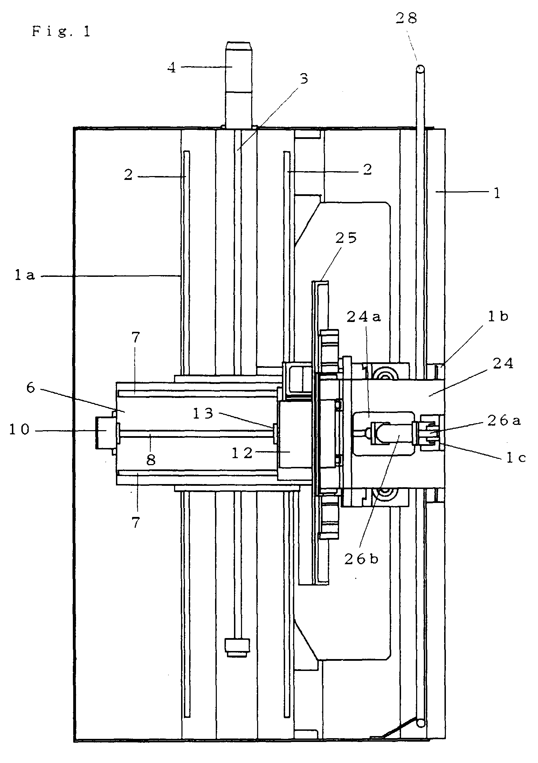

Fig. 1 shows a front view of a numerical control router in the present invention,

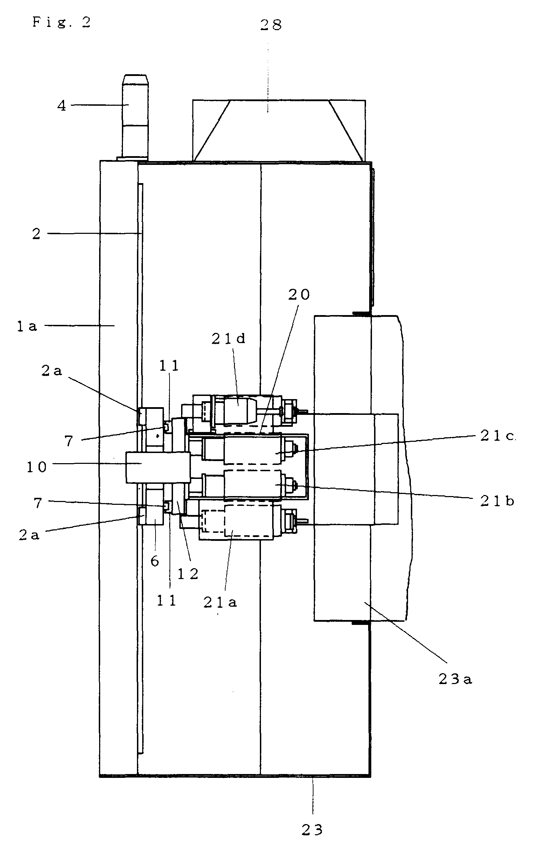

Fig. 2 shows a plane view of a numerical control router in Fig. 1.
Fig. 3 shows a right side view of a numerical control router in Fig. 1.
Fig. 4 shows a view for explaining a motion of a suction table.

### DESCRIPTION OF THE PREFERRED EMBODIMENTS;

As shown in Figs, 1, 2 and 3, a horizontal beam member 1a is constructed on a support structure 1, horizontal rails 2 are fixed the side of the horizontal beam member 1a. A screw shaft 3 is provided with a hollow portion of the horizontal beam member between the horizontal rails 2 to be rotated by a motor 4, bearings 2a and 2b are engaged with the horizontal rails 2 and a screw engaged member 5 is provided with a horizontal move member 6 between the bearings 2a and 2b.

Longitudinal rails 7 are provided with the front face of the horizontal move member 6, a screw shaft 8 is provided with the horizontal move member 6 between the longitudinal rails 7 and is connected to a connecting member 10 rotated by a servomotor 9 mounted on the top of the horizontal move member 6. Bearings 11 engaged with the longitudinal rails 7 and a screw engaging member 13 engaged with the screw shaft 8 are provided with a longitudinal move member 12.

Rails 15 are fixed the under surface of a structure supporting member 14 provided with the longitudinal move member 12, a screw shaft 16 provided with the rails 15 in parallel is provided with the structure supporting member 14 to be rotated by a servomotor 17, bearings 18 engaged with rails 15 and a screw engaging member 19 are mounted on a head structure 20, and heads 21a, 21b, 21c and 21d are provided with the head structure 20 to be moved by a cylinder 22.

A housing 23 is constructed on the horizontal beam member 1a, on the front of a stretched member 1b of the support structure 1 and the side of the horizontal beam member and the stretched member 1b, and a opening 23a of the housing 23 is formed the front of the head structure 20. A table supporting member 24 is constructed the end of the stretched member 1b and a suction table 25 is attached to a rotation shaft 25a rotatablly mounted on the table supporting member 24. A hollow portion 24a is formed the center of the table supporting member 24, the base member 26a of a table rotating cylinder 26 is rotatablly connected to a cylinder supporting member 1c in the end of the stretched member 1b, a moving shaft 26b of table rotating cylinder 26 is connected to the suction table 25, an upper support 23b in the top of the opening 23a of the housing 23 is attached for stopping the rotation of the suction table 25, an under support 23c is attached to the inside of the table supporting member 24.

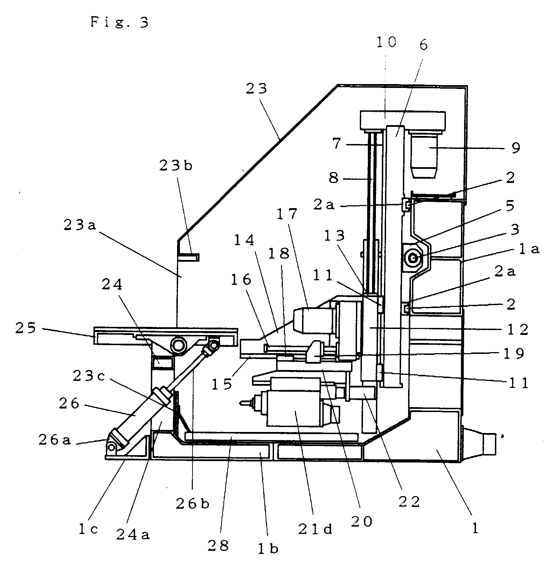

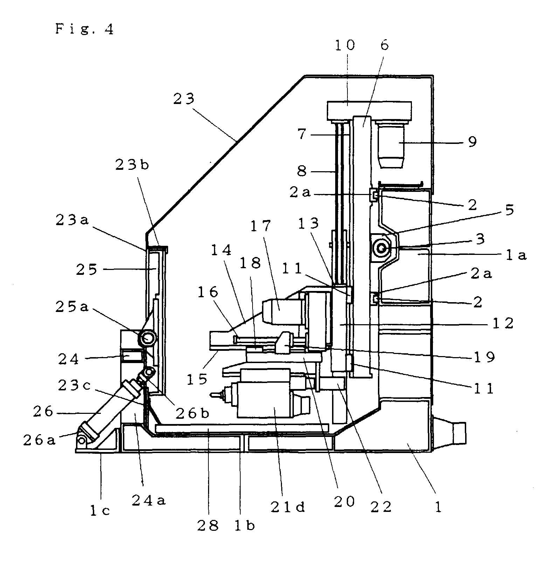

In the numerical control router of the present invention, as shown in Fig. 3, the suction table 25 is horizontally kept by stretching the moving shaft 26a of the table rotating cylinder 26. Therefore, after a process board 27 is put on the suction table 25 by a worker before the suction table 25, when the moving shaft 26b is shortened by driving the table rotating cylinder 26, as shown in Fig. 4, the upper end of the suction table 25 is supported by the upper support 23b and the lower end of the suction table 25 is supported by the under support 23c, whereby the suction table 25 is vertically stood to close all of the opening 23a of the housing 23.

Then the head structure 20 is positioned by moving the horizontal move member 6 and the longitudinal move member 12 by driving the servomotor 4 and 9, after the head structure 20 is moved to the predetermined position by the servomotor 17, the process board 27 sucked on the suction table 25 is processed by the heads 21a to 21d horizontally moved by the cylinder 22.

By vertically standing the process board 27, because wood chips scattered in the process time fall under the suction table 25 and fall by being stopped by the housing 23, it is not necessary to sweeping on the process board and the suction table. Also, the processed process board 27 can be easily changed to a new process board by rotating and horizontally keeping the suction table 25.

Therefore, the inner portion of the housing 23 may be cleaned every a predetermined interval, a factory in which the numerical control router of the present invnetion is set is kept clean and becomes quiet because noise is absorbed by the housing 23.

Since a belt conveyer 28 is set on the stretched member 1b of the support structure 1 and the end of the belt conveyer 28 is projected the outside of the housing 23, the fallen wood chips and dust are collected in the outside of the housing 23.

## Claims

1. In a numerical control router enclosed by a housing comprising a horizontal move member moving on horizontal rails provided with the side of a support structure, longitudinal move member moving on longitudinal rails provided with the horizontal move member, a head structure mounted on the longitudinal move member, and heads having process tools as a drill and a cutter respectively moved on the head structure by a cylinder before and behind, charracterized in that a housing enclosing the surrounding of the horizontal move member, the longitudinal move member and the head structure is supported by the support structure and has an opening before the head structure, a table support member is provided with the support structure in the opening of the housing, a suction table is rotatablly supported on the table support member, and a table rotating cylinder for rotating the suction table has a base member rotatablly connected to the support structure and a moving shaft rotatablly connected to the suction table, whereby a process board is mounded and sucked on the suction table, the opening of the housing closed by rotating the suction table by the table rotating cylinder and the process board is processed in a closed state.

2. A numerical control router enclosed by a housing as set forth claim 1 wherein a belt conveyer is set on a stretched member of the support structure and the end of the belt conveyer is projected the outside of the housing.
